(19) Europäisches Patentamt
European Patent Office
Office européen des brevets

(11) **EP 4 114 700 B1**

(12) **EUROPÄISCHE PATENTSCHRIFT**

(45) Veröffentlichungstag und Bekanntmachung des Hinweises auf die Patenterteilung:
**03.09.2025 Patentblatt 2025/36**

(21) Anmeldenummer: **21712035.1**

(22) Anmeldetag: **23.02.2021**

(51) Internationale Patentklassifikation (IPC):
**B60W 30/02** (2012.01) **B62D 5/04** (2006.01)
**B62D 6/00** (2006.01) **B62D 15/02** (2006.01)

(52) Gemeinsame Patentklassifikation (CPC):
**B62D 5/04; B62D 6/001; B62D 15/025;**
B62D 5/0481; B62D 6/002; B62D 15/0255

(86) Internationale Anmeldenummer:
**PCT/DE2021/200020**

(87) Internationale Veröffentlichungsnummer:
**WO 2021/175383 (10.09.2021 Gazette 2021/36)**

(54) **VERFAHREN ZUR STEUERUNG EINES FAHRZEUGES**

METHOD FOR STEERING A VEHICLE

PROCÉDÉ POUR LA DIRECTION D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.03.2020 DE 102020202757**

(43) Veröffentlichungstag der Anmeldung:
**11.01.2023 Patentblatt 2023/02**

(73) Patentinhaber: **AUMOVIO Autonomous Mobility Germany GmbH**
**85057 Ingolstadt (DE)**

(72) Erfinder: **KESSLER, Philipp**
**60488 Frankfurt am Main (DE)**

(74) Vertreter: **Aumovio Corporation**
**Continental Automotive**
**Technologies GbH**
**Putzbrunner Straße 69**
**81739 München (DE)**

(56) Entgegenhaltungen:
DE-A1- 102014 223 000    DE-A1- 102018 203 617
JP-A- 2018 094 966        US-A1- 2017 305 458
US-A1- 2017 372 150

EP 4 114 700 B1

**Beschreibung**

Die vorliegende Erfindung betrifft ein Verfahren zur Steuerung eines Fahrzeuges entlang einer Trajektorie. Ferner betrifft die Erfindung eine Steuereinrichtung, die dazu hergerichtet ist, ein Fahrzeug entlang einer Trajektorie anhand des erfindungsgemäßen Verfahrens zu steuern, sowie ein Computerprogramm mit Programmcode zur Durchführung eines erfindungsgemäßen Verfahrens und ein computerlesbares Speichermedium, welches den Computer, auf dem es ausgeführt wird, veranlasst, das erfindungsgemäße Verfahren auszuführen.

Technologischer Hintergrund

Moderne Fahrzeuge wie Personenkraftfahrzeuge, Lastkraftfahrzeuge, motorisierte Zweiräder oder andere aus dem Stand der Technik bekannte Fortbewegungsmittel werden zunehmend mit (Fahrer-)Assistenzsystemen ausgerüstet, welche mit Hilfe von geeigneter Sensorik bzw. Sensorsystemen die Umgebung erfassen, Verkehrssituationen erkennen und den Fahrer unterstützen können, z. B. durch einen Brems- oder Lenkeingriff oder durch die Ausgabe einer optischen oder akustischen Warnung. Als Sensorsysteme zur Umgebungserfassung werden regelmäßig Radarsensoren, Lidarsensoren, Kamerasensoren, Ultraschallsensoren oder dergleichen eingesetzt. Aus den durch die Sensoren ermittelten Sensordaten können anschließend Rückschlüsse auf die Umgebung gezogen werden. Anhand dieser Rückschlüsse können dann gattungsgemäße Assistenzfunktionen verwirklicht werden, wie z. B. eine Spurhalteregelung bzw. ein Spurhalteassistent (LKA - Lane Keep Assist).

Ferner umfassen moderne Fahrzeuge in der Regel eine elektrische Lenkung bzw. Lenkunterstützung (EPS = Electric Power Steering, EPAS = Electric Power Assisted Steering) bzw. Servolenkung, welche den Fahrer unterstützt, indem die vom Fahrer aufzuwendende Kraft zur Betätigung des Lenkrads reduziert wird. Beispielsweise kann dies dadurch erfolgen, dass ein Elektrostellmotor (EPS-Motor oder Electric Power Steering Motor) bzw. Servomotor an der Mechanik der Lenkung, z. B. an Lenksäule oder Lenkgetriebe, angeordnet ist und die Lenkbewegungen des Fahrers durch ein beaufschlagtes Motormoment bzw. Servomoment unterstützt oder überlagert. Der Elektrostellmotor sowie das dazugehörige Steuergerät können dabei im Lenkstrang (C-EPS oder Column EPS), am Lenkgetrieberitzel (P-EPS oder Pinion EPS) oder parallel/konzentrisch um die Zahnstange (R-EPS oder Rack EPS) positioniert sein. Zudem ist eine Sensorik vorgesehen, die einen absoluten Lenkradwinkelsensor, einen Lenkmomentsensor und einen relativen Rotorlagewinkelsensor des Motors sowie gegebenenfalls Stromsensoren umfasst, aus denen sich z. B. ein Motormoment bzw. Servomoment abschätzen lässt.

Im Bereich der Assistenzfunktionen und dem autonomen Fahren wird das Fahrzeug in der Regel über eine Kaskade von Planern (z. B. Manöverplaner und Trajektorienplaner) und Reglern gesteuert. Dabei wird vom Regler versucht die vom Planner erzeugte Trajektorie abzufahren. Abhängig vom Planungsansatz kann es jedoch dazu kommen, dass der Planner Trajektorien plant, die aufgrund von Aktorbegrenzungen, die der Planner nicht kennt oder nicht verarbeiten kann, vom Regler bzw. vom Fahrzeug nicht oder nur schlecht gefahren werden können. Die Aktoren können so in ihre Begrenzung laufen und ein Windup-Effekt in der Regelung kann entstehen. Das bedeutet während eines Planungszyklus kann das Fahrzeug von der gewünschten Trajektorie abweichen, wodurch die neu geplante Trajektorie sich stärker ändern muss, um die Abweichung zu kompensieren. Hierdurch entsteht eine interne Dynamik zwischen Planer und Regler, die das Führungsverhalten des Fahrzeuges verschlechtert und vom Fahrer, z. B. als Schwingen in der Spur, bemerkbar ist. Sofern eine Trajektorie nicht fahrbar ist, muss ein Fahrereingriff erfolgen. Es existieren modellprädiktive Ansätze in der Planung und/oder Regelung, welche den Vorteil bieten, dass die Fahrzeugdynamik und die Aktorbegrenzungen in Form eines Modells bei der Planung berücksichtigt werden können. Durch diesen Ansatz kann bei einer hohen Modellgenauigkeit auf die unterlagerten Regler verzichtet werden. Derartige Ansätze benötigen jedoch mit steigender Modellkomplexität vermehrt Rechenaufwand, wobei aber der Rechenaufwand bereits für einfache Modelle extrem hoch ist, sodass ein Modell, welches zusätzlich Aktordynamiken und Begrenzungen berücksichtigt, nicht praktikabel ist.

Druckschriftlicher Stand der Technik

Aus der DE 10 2016 221 723 A1 ist ein Steuerungssystem für ein Fahrzeug mit mehreren Aktoren bzw. Aktuatoren (z. B. Lenkung, Antriebsstrang, Betriebsbremse und Einparkbremse) bekannt. Das Steuerungssystem umfasst dabei ein Modul zur Bewegungssteuerung des Fahrzeugs, ein Modul zur Aktuatorensteuerung, ein Modul zur Vorgabe einer umzusetzenden Fahrzeugbetriebsstrategie und ein Modul zur Momentkoordination, wobei aus den Bewegungsanforderungen an das Fahrzeug ein daraus resultierender normierter Anforderungsvektor mit einer longitudinalen Komponente, einer lateralen Komponente und einer vertikalen Komponente gebildet wird. Ferner ist das Steuerungssystem konfiguriert, um in Abhängigkeit von der Fahrzeugbetriebsstrategie und dem Anforderungsvektor Momente zu bilden, die auf die Aktuatoren verteilt werden.

Die DE 10 2015 209 066 A1 beschreibt ein Verfahren zur aufwandsreduzierte Trajektorienplanung für ein Fahrzeug, bei dem der Suchraum zur Ermittlung der Trajektorie in Abhängigkeit von einem approximierten Endzeitpunkt begrenzt wird. Dabei wird der Suchraum zur Ermittlung der Trajektorie für das Fahrmanöver auf einen bestimmten Bereich um den approximierten Endzeitpunkt herum begrenzt, insbesondere um 10 % um den approximierten Endzeitpunkt herum, um den Rechenaufwand zur Ermittlung der Trajektorie zu reduzieren.

Die DE 10 2014 223 000 A1 (D1) zeigt die Merkmale des Oberbegriffs des Anspruchs 1 und befasst sich mit der Suche nach einer kollisionsfreien Trajektorie für ein Fahrzeug. Im Mittelpunkt dieser Druckschrift steht das Auffinden einer Trajektorie, wobei Aktuatorbegrenzungen direkt als Nebenbedingung für ein Optimierungsverfahren genutzt werden

Aus der DE 10 2018 203 617 A1 (D2) ist ein Verfahren zur Berechnung einer Trajektorien-Limitierung bekannt. Dort werden Eigenschaften des Fahrzeugs, Randbedingungen des Fahrzeugs sowie aktuelle Begrenzungen der Aktuatoren einbezogen. Die Trajektorien-Limitierung wird dann an ein Fahrzeugassistenzsystem übermittelt.

Aus der US 2017/0372150 A1 ist bekannt, basierend auf detektierten Objekten eine befahrbare Zone festzulegen. Für die Trajektorienbestimmung wird dabei ein maximaler Lenkwinkel herangezogen, welcher von der Geschwindigkeit des Fahrzeugs und weiteren Größen abhängen kann.

Aufgabe der vorliegenden Erfindung

Der vorliegenden Erfindung liegt daher die Aufgabe zugrunde, ein gattungsgemäßes Verfahren zur Steuerung eines Fahrzeuges sowie zur Verfügung zu stellen, bei dem die Trajektorienplanung in einfacher und kostengünstiger Weise verbessert wird.

Lösung der Aufgabe

Die vorstehende Aufgabe wird durch die gesamte Lehre des Anspruchs 1 sowie der nebengeordneten Ansprüche gelöst. Zweckmäßige Ausgestaltungen der Erfindung sind in den Unteransprüchen beansprucht.

Bei dem erfindungsgemäßen Verfahren zur Steuerung eines Fahrzeuges entlang einer Trajektorie, weist das Fahrzeug eine Steuereinrichtung auf, welche die Trajektorie innerhalb eines festlegbaren Suchraumes plant (Suchraum der Trajektorie bzw. zur Trajektorienplanung) und zur Steuerung des Fahrzeuges auf Aktoren des Fahrzeuges zugreifen kann, wobei für mindestens eine Stellgröße eines Aktors mindestens ein Grenzwert ermittelt wird, und der Suchraum der Stellgröße anhand des Grenzwertes oder der Grenzwerte festgelegt wird. Anschließend wird der Suchraum der Stellgröße zur Planung der Trajektorie herangezogen. Der Suchraum der Stellgröße stellt dabei einen Unterraum des Suchraums der Trajektorie dar, wodurch eine Begrenzung des Suchraums der Stellgröße implizit auch den Suchraum der Trajektorie begrenzt. Das erfindungsgemäße Verfahren ermöglicht dadurch die Berechnung einer Trajektorie in Bezug auf die Aktordynamik. Zudem kann dadurch Rechenzeit in besonderem Maße eingespart werden, beispielsweise gegenüber einer Methode bei der die Aktordynamik in ein MPC (model predictive control)-Modell eingebunden wird. Dadurch, dass eine Abtrennung vom Planer erfolgt, kann die Methode auch für verschiedene Planeransätze eingesetzt werden, wobei softwareseitige Limitierungen für das Motormoment und die Lenkgeschwindigkeit sowie auch Degradierungen des Lenksystems in einfacher Weise mitberücksichtigt werden können. Die Betriebssicherheit wird dadurch noch zusätzlich erhöht. Ferner ist das beschriebene Verfahren auch für mehrere Aktoren und unabhängig von einem komplexen Fahrzeugmodell einsetzbar.

Erfindungsgemäß ist als Aktor die Lenkung des Fahrzeuges oder ein EPS-Motor einer elektrischen Lenkung vorgesehen.

Erfindungsgemäß kann als Stellgröße der Lenkwinkel und/oder die Lenkwinkelgeschwindigkeit und/oder die Fahrbahnkrümmung und/oder das Motormoment des EPS-Motors vorgesehen sein.

Erfindungsgemäß kann als Grenzwert der maximale zeitliche Verlauf der Stellgröße nach links und der maximale zeitliche Verlauf der Stellgröße nach rechts vorgesehen sein, die dann mit dem Planner abgestimmt sind. Vorzugsweise kann es sich dabei um den maximalen Lenkwinkel nach links und den maximalen Lenkwinkel nach rechts handeln, sofern als Stellgröße oder als eine der Stellgrößen der Lenkwinkel vorgesehen ist. Alternativ oder zusätzlich kann als Grenzwert auch die maximal fahrbare (Fahrbahn-) Krümmung nach links und die maximal fahrbare (Fahrbahn-) Krümmung nach rechts vorgesehen sein.

Erfindungsgemäß ist die Differenz zwischen der aktuell am EPS-Motor anliegende Kraft und der maximal verfügbaren Kraft bestimmt, beispielsweise dadurch, dass die Leistung der EPS bzw. des EPS-Motors zu Beginn festgelegt oder von der EPS als Eingangssignal der Prädiktion zur Verfügung gestellt wird. Daraus resultiert der Vorteil, dass z. B. auch verschiedene Degradationsstufen abgebildet werden können, falls nur noch ein Teil der Leistung zur Verfügung steht. Dementsprechend kann anhand der Differenz eine Abschätzung des Potentials und/oder eine Leistungsüberprüfung des EPS-Motors erfolgen, indem z. B. eine steigende Differenz auf einen steigenden Degradationsgrad schließen lässt.

Ferner können die nichtlinearen Reibkräfte der Lenkung, bestimmt werden, wobei der Grenzwert unter Berücksichtigung der nichtlinearen Reibkräfte ermittelt wird.

Zweckmäßigerweise können die Straßenkräfte abgeschätzt werden, sodass der Grenzwert unter Berücksichtigung der Straßenkräfte ermittelt werden kann.

Die Bestimmung der Straßenkräfte kann dabei anhand einer auf einer virtuellen Feder basierenden Modellierung erfolgen.

In vorteilhafter Weise kann die Federsteifigkeit der virtuellen Feder über die Fahrzeuggeschwindigkeit und ein Motormoment bestimmt bzw. berechnet werden. Beispielsweise kann die Federsteifigkeit über einen mathematischen Term beschrieben werden, der sich aus einem rein geschwindigkeitsabhängigen ersten Teil, z. B. von der Fahrzeuggeschwindigkeit, und einem geschwindigkeits- und momentenabhängigen zweiten Teil z. B. von der Fahrzeuggeschwindigkeit und dem maximal zur Verfügung gestellten Motormoment bzw. EPS-Moment, zusammensetzt.

Vorzugsweise wird die Federsteifigkeit dabei anhand einer Schätzmethode, wie z. B. einer Methode der kleinsten Quadrate ermittelt, insbesondere anhand einer Recursive Least Squares (RLS)-Methode. Alternativ dazu können aber auch andere Schätzungen bzw. Schätzmethoden angewendet werden. Beispielsweise kann eine initiale Schätzung vorgesehen sein, die z. B. auch offline erfolgen kann und keines rekursiven Verfahrens wie dem RLS bedarf. Eine derartige Methode ist zwar unabhängig vom Verfahrensablauf, kann aber stark von anderen Parametern abhängen, wie z. B. den verwendeten Reifen.

Ferner kann mindestens ein Sensor zur Umfelderfassung vorgesehen sein, insbesondere eine Kamera und/oder ein Lidarsensor und/der ein Radarsensor und/oder ein Ultraschallsensor. Anhand der Sensordaten des Sensors oder der Sensoren kann die Fahrzeugumgebung sowie darin befindliche Objekte und Verkehrsteilnehmer erfasst werden. Dabei können auch die Sensordaten mehrerer Sensoren fusioniert werden, um die Umgebungs- und Objekterfassung noch zu verbessern.

In praktischer Weise kann das erfasste Fahrzeugumfeld inklusive darin befindlicher Objekte und Verkehrsteilnehmer zur Festlegung des Suchraumes der Stellgröße und/oder zur Trajektorienplanung herangezogen werden. Dies kann z. B. dadurch erfolgen, dass der Suchraum nach möglichen Trajektorien zusätzlich eingegrenzt wird, da sich von den Sensoren detektierte Objekte im zuvor begrenzten Suchraum befinden. Ferner kann die Auswahl der zu befahrenden Trajektorie bei oder nach der Trajektorienplanung derart erfolgen, dass z. B. kollisionsvermeidende Aspekte berücksichtigt werden, indem eine Trajektorie ausgewählt wird, welche entlang des Straßenverlaufs und ohne Kollision mit anderen Objekten/Verkehrsteilnehmern verläuft.

Ferner umfasst die vorliegende Erfindung ein Computerprogramm mit Programmcode zur Durchführung des erfindungsgemäßen Verfahrens, wenn das Computerprogramm in einem Computer oder einem sonstigen aus dem Stand der Technik bekannten programmierbaren Rechner ausgeführt wird. Demzufolge kann das Verfahren auch als rein computerimplementiertes Verfahren ausgestaltet sein, wobei der Begriff "computerimplementiertes Verfahren" im Sinne der Erfindung eine Ablaufplanung oder Vorgehensweise beschreibt, welche anhand eines Rechners verwirklicht bzw. durchgeführt wird. Der Rechner, wie z. B. ein Computer, ein Computernetzwerk oder eine andere aus dem Stand der Technik bekannte programmierbare Vorrichtung (z. B. eine einen Prozessor, Mikrocontroller oder dergleichen umfassenden Rechnervorrichtung), kann dabei mittels programmierbarer Rechenvorschriften Daten verarbeiten.

Zudem umfasst die vorliegende Erfindung ein computerlesbares Speichermedium, das Anweisungen umfasst, welche den Computer, auf dem sie ausgeführt werden, veranlassen, ein Verfahren nach mindestens einem der vorhergehenden Ansprüche durchzuführen.

Neben- oder untergeordnet umfasst die Erfindung auch eine Steuereinrichtung zur Steuerung eines Fahrzeuges entlang einer Trajektorie, die derart hergerichtet ist, dass die Steuerung des Fahrzeuges anhand des erfindungsgemäßen Verfahrens erfolgt.

Unter dem Begriff Suchraum der Fahrzeugtrajektorie bzw. zur Trajektorienplanung im Sinne der Erfindung wird die räumliche und zeitliche Erstreckung verstanden, innerhalb der die Steuereinheit nach möglichen fahrbaren Trajektorien sucht, wobei mehrere Trajektorien innerhalb des Suchraumes geplant werden können, um dann die jeweilige Trajektorie situationsadäquat auszuwählen. Unter dem Begriff Suchraum der Stellgröße im Sinne der Erfindung wird die räumliche und zeitliche Erstreckung verstanden, innerhalb der die Steuereinheit nach möglichen Stellgrößen sucht. Der Suchraum der Stellgröße stellt dabei einen Unterraum des Suchraums der Fahrzeugtrajektorie da.

Unter dem Begriff Grenzwert im Sinne der Erfindung wird ein Maximalwert oder Minimalwert der Stellgröße verstanden, d. h. ein Maximum bzw. Minimum, dessen Verlauf z. B. entlang der zurückgelegten Strecke bzw. der Zeit t erfasst werden kann.

Ausdrücklich umfasst sind von der Erfindung auch nicht explizit genannte Merkmalskombinationen der Merkmale bzw. Ansprüche, sogenannte Unterkombinationen.

<u>Beschreibung der Erfindung anhand von Ausführungsbeispielen</u>

Im Folgenden wird die Erfindung anhand von zweckmäßigen Ausführungsbeispielen näher beschrieben. Es zeigen:

Fig. 1    eine vereinfachte schematische Darstellung eines Fahrzeuges, bei dem eine Prädiktion einer maximalen Stellgröße anhand des erfindungsgemäßen Verfahrens erfolgt;

Fig. 2    eine vereinfachte schematische Darstellung der Abhängigkeit der virtuellen Steifigkeit von Fahrzeuggeschwindigkeit und maximalem EPS-Moment;

Fig. 3    eine vereinfachte Darstellung eines anhand des erfindungsgemäßen Verfahrens eingegrenzten Suchraumes des Lenkwinkels, sowie

Fig. 4    eine vereinfachte schematische Darstellung eines Ablaufplans des erfindungsgemäßen Verfahrens.

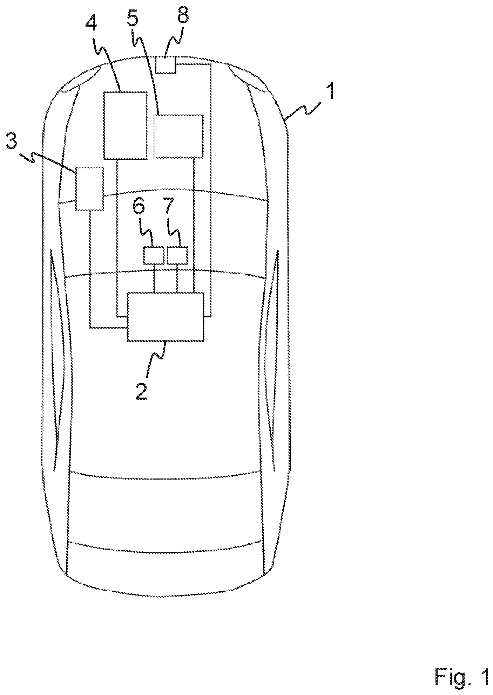

Bezugsziffer 1 in Fig. 1 bezeichnet ein Fahrzeug mit verschiedenen Aktoren (Lenkung 3, Motor 4, Bremse 5), welches eine Steuereinrichtung 2 (ECU, Electronic Control Unit) aufweist, durch die eine Trajektorienplanung in Bezug auf die Aktordynamik bzw. Aktordynamiken erfolgen kann. Die Trajektorie wird dabei anhand eines Trajektorienplaners berechnet, wobei eine Prädiktion einer maximalen Stellgröße des jeweiligen Aktors insbesondere in Querrichtung zur Suchraumbegrenzung des Trajektorienplaners erfolgt und zur Trajektorienplanung herangezogen wird. Der Trajektorienplaner kann dabei als Hardwaremodul der Steuereinrichtung 2 oder als reines Softwaremodul ausgestaltet sein. Ferner weist das Fahrzeug 1 Sensoren zur Umfelderfassung auf (Kamera 6, Lidarsensor 7 sowie Radarsensor 8), deren Sensordaten zur Umfeld- und Objekterkennung genutzt werden, sodass verschiedene Assistenzfunktionen, wie z. B. Notbremsassistent (EBA, Electronik Brake Assist), Abstandsfolgeregelung (ACC, Automatic Cruise Control), Spurhalteregelung bzw. ein Spurhalteassistent (LKA, Lane Keep Assist) oder dergleichen, realisiert werden können. In praktischer Weise kann die Ausführung der Assistenzfunktionen ebenfalls über die Steuereinrichtung 2 oder eine eigene Steuereinrichtung erfolgen.

Das erfindungsgemäße Verfahren ist in der Regel auf alle in gattungsgemäßen Fahrzeugen vorkommenden Aktoren anwendbar, somit auch auf alle in gattungsgemäßen Fortbewegungsmitteln eingesetzten Lenkungstypen. Dementsprechend auch auf überaktorierte Fahrzeuge, d. h. auch bei einer Vorder- und Hinterachslenkung. Nachfolgend wird das erfindungsgemäße Verfahren exemplarisch anhand eines Fahrzeuges mit einer Vorderachslenkung dargestellt, wobei als Stellgröße der Lenkwinkel $\delta$ herangezogen wird, d. h. der aktuelle Lenkwinkel $\delta$ kann zunächst als Startwert gemessen werden. Hierbei ist davon auszugehen, dass der verwendete Trajektorienplaneransatz einen maximalen Lenkwinkel $\delta\_max$ verarbeiten kann. Alternativ oder zusätzlich wären aber auch andere Stellgrößen, wie z. B. Lenkwinkelgeschwindigkeit oder Krümmung möglich. Das Kräftegleichgewicht der Lenkung lässt sich mathematisch beschreiben, indem

$$(1) \quad m\_EPS \cdot a = F\_Mot - d \cdot v - F\_Friction - F\_Load$$

gilt. Dabei ist m_EPS die akkumulierte Masse des Lenkungssystems, a die Beschleunigung der Zahnstange, F_Mot die vom EPS-Motor zur Verfügung gestellte Kraft, d die Dämpfung der EPS, v die Geschwindigkeit der Zahnstange, F_Friction die nichtlineare Reibung der EPS und die an der EPS anliegende Last F_Load, bestehend aus den Straßenkräften F_Str und den Kräften, die vom Lenkrad kommen. Derartige Straßenkräfte werden z. B. beim Befahren einer Straße auf die Fahrzeugräder ausgeübt. Um die Energieübertragung dieser Straßenkräfte zu streuen werden in der Regel Feder- oder Dämpferbaugruppen im Fahrzeugaufhängungssystem eingesetzt.

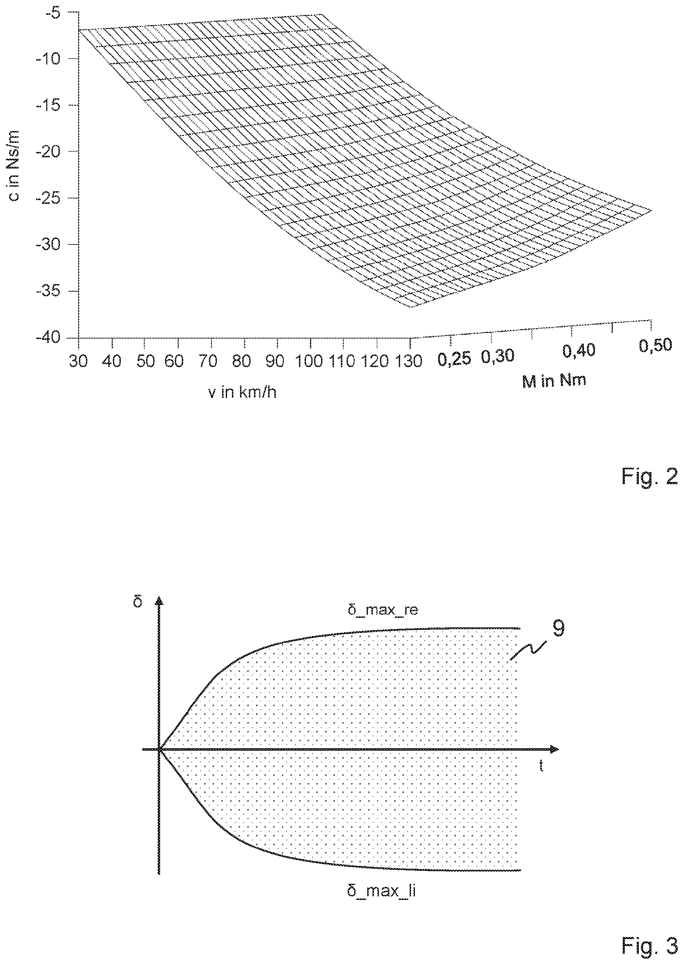

Zweckmäßigerweise wird eine maximale Stellgröße abhängig von der verfügbaren Aktorleistung ohne Störeinfluss bestimmt. Dabei können Störgrößen wie das Handmoment des Fahrers, welches in die Kräfte vom Lenkrad eingeht, vernachlässigt werden. Auch von außerhalb einwirkende Störgrößen, wie z. B. Seitenwind, werden vernachlässigt, da sich derartige Störungen z. B. durch die Regelung kompensieren lassen. Die verbleibenden Straßenkräfte F_Str hingegen sowie damit auch F_Load lassen sich nicht in einfacher Weise vernachlässigen, da diese den maximalen Lenkwinkel maßgeblich beeinflussen und somit nicht als Störung angesehen werden, da sie immer auftreten. Betrachtet man die Straßenkräfte F_Str auf Fahrzeugebene in einem Einspurmodell zeigt sich, dass sich diese in Abhängigkeit vom vorliegenden Lenkwinkel, der Fahrzeuggeschwindigkeit und dem Straßenreibwert ergeben. Der Einfluss des Straßenreibewerts kann hierbei jedoch vernachlässigt werden, sodass ausschließlich Szenarien mit Hochreibwert betrachtet werden. Dies ist möglich, da ein verringerter Reibwert zwar zu einem höheren maximalen Lenkwinkel führt, dieser aber nicht zwangsläufig zu einer höheren fahrbaren Krümmung und somit auch nicht zu einer fahrbaren Trajektorie führt. Dementsprechend verbleibt die Abhängigkeit der Straßenkräfte F_Str vom Lenkwinkel und der Fahrzeuggeschwindigkeit. Aufgrund der Lenkwinkelabhängigkeit zur Modellierung der Straßenkräfte F_Str wird eine virtuelle Feder mit der fahrzeuggeschwindigkeitsabhängigen Federsteifigkeit c verwendet. Die Federsteifigkeit c zeigt ebenfalls eine Abhängigkeit vom maximal gestellten EPS-Moment M_Mot_max, wie in Fig. 2 dargestellt. Dies resultiert aus Nichtlinearitäten, wie der Übersetzung zwischen Zahnstangeweg und Lenkwinkel am Rad oder dem Lenkwinkel-abhängigen Nachlauf.

Somit ergibt sich aus Gleichung (1):

(2)     m_EPS · a = F_Mot - d · v - F_Friction - c (v_veh, M_Mot_max) · x.

Dabei ist v_veh die Fahrzeuggeschwindigkeit und x die Zahnstangenposition, die über ein Übersetzungsverhältnis i in einen Lenkwinkel $\delta$ umgerechnet werden kann. Der Term c (v_veh, M_Mot_max) setzt sich dabei aus einem rein geschwindigkeitsabhängigen Teil c1 (v-veh) und einem geschwindigkeits- und momentenabhängigen Teil c2 (v_veh, M_Mot_max) zusammen:

(3)     c (v_veh, M_Mot_max) = c1 (v_veh) + c2 (v_veh, M_Mot_max).

Daraus kann eine Lookup-Tabelle für die Federsteifigkeit c abgeleitet werden (gemäß Fig. 2), die sich z. B. über Sprunganregungen auf die Lenkung bei verschiedenen Geschwindigkeiten herleiten lässt. Beispielsweise kann über einen RLS (recursive least squares)-Algorithmus die Federsteifigkeiten c geschwindigkeitsabhängig geschätzt und adaptiert werden. Hierbei muss lediglich c1 (v_veh) adaptiert werden, da der Term c2 (v_veh, M_Mot_max) konstruktive sich nicht verändernde Zusammenhänge widerspiegelt. Infolgedessen soll dabei ein maximal stellbarer Lenkwinkel $\delta$ nach links und nach rechts prädiziert werden, wobei für F_Mot die maximal vom EPS-Motor noch stellbare Kraft gewählt und als Sprung aufgeschaltet wird, welcher mit einer Motorzeitkonstanten T_Mot gefiltert wird, gemäß

(4)     F_Mot = 1 / (T_Mot · s + 1) · F_Mot_max.

Dabei ist F_Mot_max die Differenz zwischen der aktuell anliegenden Kraft und der maximal zur Verfügung stehenden Kraft. Die maximal zur Verfügung stehende Kraft kann über die Leistung der EPS festgelegt werden oder wird von der EPS als Eingangssignal der Prädiktion zur Verfügung gestellt. Dadurch können z. B. verschiedene Degradationsstufen des EPS-Motors abgebildet werden, falls nur noch ein Teil der Leistung zur Verfügung steht. Die nichtlineare Reibung F_Friction entspricht der Haftreibung im System und kann über eine sogenannte Totzone in der Motorkraft F_Mot mitberücksichtigt werden, da immer nur eine konstante Bewegungsrichtung betrachtet wird und somit die Hystereseeffekte der Haftreibung nicht zum Tragen kommen. Es ergibt sich demnach

(5)     F_Mot_Fric =  0               if I F_Mot I < F_Haft

                        F_Mot - F_Haft    if F_Mot > F_Haft

                        F_Mot + F_Haft    if -F_Mot < F_Haft.

Dabei ist F_Haft die Amplitude der Haftkraft. Ferner ergibt sich aus Gleichung (2) die Gleichung (6),

(6)     m_EPS · a = F_Mot_Fric - d · v - c (v_veh, M_Mot_max) · x,

welche einem Verzögerungsglied zweiter Ordnung entspricht. Die Dämpfung d lässt sich dabei konstant wählen.

Durch Umstellen nach der Beschleunigung in Gleichung (6) und doppeltem Integrieren kann so eine maximale Zahnstangenposition bzw. ein maximaler Lenkwinkel $\delta$_max prädiziert werden. Die sich ergebenden Vektoren für den maximalen Lenkwinkel nach rechts ($\delta$_max_re) und nach links ($\delta$_max_li) über der Zeit t können dann zur Reduktion der zu versendenden Datenmenge gesampelt und als Feedbacksignal an den Planer weitergeleitet werden. Die beiden Vektoren geben die obere und untere Grenze des Suchraums der Stellgröße an, in dem der Trajektorienplaner nach einer optimalen Lösung suchen kann, wie in Fig. 3 anhand des gepunktet dargestellten begrenzten Suchraums 9 zwischen den beiden Vektoren $\delta$_max_re, $\delta$_max_li gezeigt.

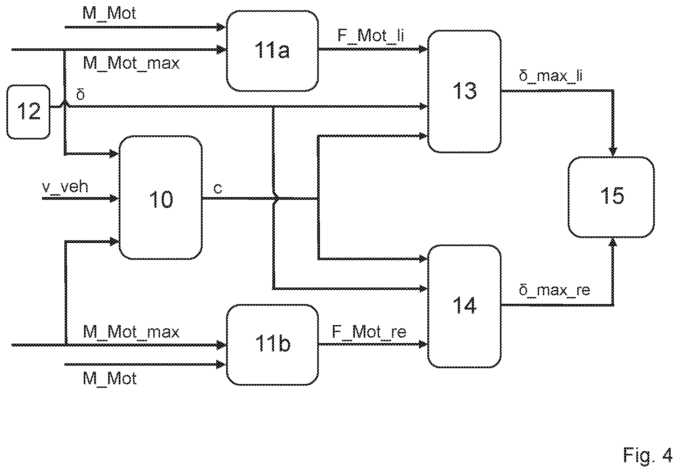

In dem Ausführungsbeispiel eines Verfahrensablaufs gemäß Fig. 4 wird für ein Fahrzeug mit Vorderachslenkung ein prädizierter maximaler zeitlicher Verlauf des Lenkwinkel nach links und nach rechts ausgeben. Dabei wird zunächst der Lenkwinkel $\delta$ als Startwert bestimmt bzw. gemessen (Lenkwinkelbestimmung 12) und die Federsteifigkeit c z. B. anhand der beschriebenen Look-up-Tabelle (vgl. Fig. 2) bestimmt (Bestimmen der Federsteifigkeit 10). Zudem wird die Motoreigenschaft und -charakteristik 11a (links) bzw. 11b (rechts) u. a. anhand des aktuell anliegenden Motormoments (Motormomenterfassung) bestimmt, d. h. des aktuell anliegenden Motormoments M_Mot. Die Motoreigenschaft und -charakteristik kann nach links und nach rechts unterschiedlich sein, z. B. aufgrund von Asymmetrien der Lenkung oder auch künstlich eingeführten Asymmetrien, z. B. im Zuge einer LDP (Lane Departure Protection)-Funktion, bei der die Lenkung in Richtung der näheren Fahrbahnbegrenzung stärker begrenzt wird. Anhand von Federsteifigkeit und Motoreigenschaft und -charakteristik kann dann die Prädiktion des Verlaufs der maximalen Stellgröße erfolgen, vorliegend der maximale Lenkwinkel nach links (Prädiktion links 13) und der maximale Lenkwinkel nach rechts (Prädiktion rechts 14). Die prädizierten Lenkwinkel werden dann an den Planer 15 weitergeleitet. Sofern das Fahrzeug zusätzlich eine Hinterachslenkung aufweist, besteht die Möglichkeit den Hinterachsenlenkwinkel in gleicher Weise wie den Vorderachsenlenkwinkel zu bestimmen, d. h. es kommen für die Hinterachslenkung zwei weitere Vektoren an der Hinterachse hinzu, einer für den maximalen Lenkwinkel nach links und einer für den maximalen Lenkwinkel nach rechts. Dementsprechend beschreibt der Verfahrensablauf in Fig. 4 zum einen den Verfahrensablauf für die Bestimmung der maximalen Lenkwinkel für die Vorderachse oder die Hinterachse. Alternativ oder zusätzlich kann als Stellgröße die zu fahrende Krümmung verwendet werden, unabhängig davon, ob eine Hinterachslenkung vorhanden ist oder nicht. Der Vorteil dieser Ausgestaltung liegt darin, dass auch bei vorhandener Hinterachslenkung nur zwei Vektoren entstehen (maximale Krümmung nach links und nach rechts). Jedoch sollte dann wieder ein Fahrzeugmodell zur Bestimmung vorgesehen werden.

In praktischer Weise kann die prädizierte Stellgrößenbegrenzung ebenfalls für Anti-Windup-Konzepte im Regler eingesetzt werden. Ferner kann die Lookup-Tabelle der Steifigkeit sowie Zusammenhang gemäß Fig. 2 auch für eine Lastschätzung des Fahrzeuges genutzt werden.

BEZUGSZEICHENLISTE

| | |
|---|---|
| 1 | Fahrzeug |
| 2 | Steuereinrichtung |
| 3 | Lenkung |
| 4 | Motor |
| 5 | Bremse |
| 6 | Kamera |
| 7 | Lidarsensor |
| 8 | Radarsensor |
| 9 | Suchraum (der Stellgröße bzw. des Lenkwinkels) |
| 10 | Bestimmen der Federsteifigkeit |
| 11a | Motoreigenschaft und -charakteristik (links) |
| 11b | Motoreigenschaft und -charakteristik (rechts) |
| 12 | Lenkwinkelbestimmung |
| 13 | Prädiktion des maximalen Lenkwinkels links |
| 14 | Prädiktion des maximalen Lenkwinkels rechts |
| 15 | Trajektorienplaner |
| $\delta$ | Lenkwinkel |
| c | Federsteifigkeit |

**Patentansprüche**

1. Verfahren zur Steuerung eines Fahrzeuges (1) entlang einer Trajektorie, bei dem

   das Fahrzeug (1) eine Steuereinrichtung (2) aufweist, welche die Trajektorie innerhalb eines festlegbaren Suchraumes der Trajektorie plant und zur Steuerung des Fahrzeuges (1) auf Aktoren (3, 4, 5) des Fahrzeuges (1) zugreifen kann, wobei
   für mindestens eine Stellgröße eines Aktors (3, 4, 5) mindestens ein Grenzwert ermittelt wird, und
   ein Suchraum (9) der Stellgröße anhand des mindestens einen Grenzwertes festgelegt wird, wobei
   der Suchraum (9) zur Planung der Trajektorie herangezogen wird, wobei als Stellgröße der Lenkwinkel und/oder die Lenkwinkelgeschwindigkeit und/oder die Fahrbahnkrümmung und/oder das Motormoment des EPS-Motors vorgesehen sind und als Grenzwert der maximale zeitliche Verlauf der Stellgröße nach links und der maximale zeitliche Verlauf der Stellgröße nach rechts vorgesehen sind, die mit dem Planner abgestimmt sind, wobei als Aktor ein EPS-Motor einer Lenkung (3) vorgesehen ist **dadurch gekennzeichnet, dass** die Differenz zwischen der aktuell am EPS-Motor anliegende Kraft und der maximal verfügbaren Kraft bestimmt wird, und die Differenz zur Abschätzung eines Potentials des EPS-Motors herangezogen wird.

2. Verfahren nach mindestens einem der vorhergehenden Ansprüche, **dadurch gekennzeichnet, dass** nichtlineare Reibkräfte (F_Fric) bestimmt werden und der Grenzwert unter Berücksichtigung der nichtlinearen Reibkräfte (F_Fric) ermittelt wird.

3. Verfahren nach mindestens einem der vorhergehenden Ansprüche, **dadurch gekennzeichnet, dass** Straßenkräfte (F_Str) bestimmt werden und der Grenzwert unter Berücksichtigung der Straßenkräfte (F_Str) ermittelt wird.

4. Verfahren nach Anspruch 3,
**dadurch gekennzeichnet, dass** die Bestimmung der Straßenkräfte (F_Str) anhand einer auf einer virtuellen Feder basierenden Modellierung erfolgt.

5. Verfahren nach Anspruch 4,
**dadurch gekennzeichnet, dass** eine Federsteifigkeit (c) der virtuellen Feder über die Fahrzeuggeschwindigkeit und ein Motormoment bestimmt wird.

6. Verfahren nach Anspruch 5,
**dadurch gekennzeichnet, dass** die Federsteifigkeit (c) anhand einer Methode der kleinsten Quadrate ermittelt wird, insbesondere anhand einer Recursive Least Squares (RLS)-Methode.

7. Verfahren nach mindestens einem der vorhergehenden Ansprüche, **dadurch gekennzeichnet, dass** mindestens ein Sensor zur Umfelderfassung vorgesehen ist, insbesondere eine Kamera (6) und/oder ein Lidarsensor (7) und/der ein Radarsensor (8) und/oder ein Ultraschallsensor.

8. Verfahren nach Anspruch 7, **dadurch gekennzeichnet, dass** das erfasste Umfeld zur Festlegung des Suchraumes (9) und/oder zur Trajektorienplanung herangezogen wird.

9. Computerprogramm mit Programmcode zur Durchführung eines Verfahren nach mindestens einem der vorhergehenden Ansprüche, wenn das Computerprogramm auf einem Computer ausgeführt wird.

10. Computerlesbares Speichermedium umfassend Anweisungen, welche den Computer, auf dem sie ausgeführt werden, veranlassen, ein Verfahren nach mindestens einem der Ansprüche 1-8 auszuführen.

11. Steuereinrichtung (2) zur Steuerung eines Fahrzeuges (1) entlang einer Trajektorie **dadurch gekennzeichnet, dass** die Steuerung des Fahrzeuges (1) anhand eines Verfahrens nach mindestens einem der Ansprüche 1-8 erfolgt.


**Claims**

1. Method for controlling a vehicle (1) along a trajectory, in which

   the vehicle (1) has a control device (2) which plans the trajectory within a definable search space of the trajectory and can access actuators (3, 4, 5) of the vehicle (1) in order to control the vehicle (1), wherein
   at least one limit value is determined for at least one manipulated variable of an actuator (3, 4, 5), and
   a search space (9) of the manipulated variable is defined on the basis of the at least one limit value, wherein the search space (9) is used to plan the trajectory, wherein the steering angle and/or the steering angle speed and/or the curvature of the road and/or the motor torque of the EPS motor is/are provided as the manipulated variable, and the maximum time progression of the manipulated variable to the left and the maximum time progression of the manipulated variable to the right are provided as the limit value and are agreed with the planner, wherein an EPS motor of a steering system (3) is provided as the actuator, **characterized in that** the difference between the force currently applied to the EPS motor and the maximum available force is determined, and the difference is used to estimate a potential of the EPS motor.

2. Method according to at least one of the preceding claims, **characterized in that** non-linear frictional forces (F_Fric) are determined and the limit value is determined taking into account the non-linear frictional forces (F_Fric).

3. Method according to at least one of the preceding claims, **characterized in that** road forces (F_Str) are determined and the limit value is determined taking into account the road forces (F_Str).

4. Method according to Claim 3, **characterized in that** the road forces (F_Str) are determined using modelling based on a virtual spring.

5. Method according to Claim 4, **characterized in that** a spring stiffness (c) of the virtual spring is determined via the vehicle speed and a motor torque.

6. Method according to Claim 5, **characterized in that** the spring stiffness (c) is determined using a least squares method, in particular using a recursive least squares (RLS) method.

7. Method according to at least one of the preceding claims, **characterized in that** at least one sensor for capturing the surroundings is provided, in particular a camera (6) and/or a lidar sensor (7) and/or a radar sensor (8) and/or an ultrasonic sensor.

8. Method according to Claim 7, **characterized in that** the captured surroundings are used to define the search space (9) and/or for trajectory planning.

9. Computer program with program code for carrying out a method according to at least one of the preceding claims, when the computer program is executed on a computer.

10. Computer-readable storage medium comprising instructions which cause the computer on which they are executed to carry out a method according to at least one of Claims 1-8.

11. Control device (2) for controlling a vehicle (1) along a trajectory,
**characterized in that**
the vehicle (1) is controlled using a method according to at least one of Claims 1-8.


**Revendications**

1. Procédé pour diriger un véhicule (1) le long d'une trajectoire, dans lequel le véhicule (1) comprend un dispositif de commande (2) qui planifie la trajectoire au sein d'une plage de recherche prédéfinie de la trajectoire et peut accéder à des actionneurs (3, 4, 5) du véhicule (1) pour diriger le véhicule (1), dans lequel

   au moins une valeur de limitation est déterminée pour au moins une variable de réglage d'un actionneur (3, 4, 5), et
   une plage de recherche (9) de la variable de réglage est déterminée à l'aide de ladite au moins une valeur de limitation, dans lequel
   la plage de recherche (9) est prise en compte pour la planification de la trajectoire, l'angle de braquage et/ou la vitesse angulaire de braquage et/ou la courbure de la chaussée et/ou le couple moteur du moteur EPS étant prévus en tant que variable de réglage, et l'évolution temporelle maximale de la variable de réglage vers la gauche et l'évolution temporelle maximale de la variable de réglage vers la droite étant prévus en tant que valeur de limitation, ceux-ci étant coordonnés avec le planificateur, un moteur EPS d'une direction (3) étant prévu en tant qu'actionneur, **caractérisé en ce que** la différence entre la force actuellement appliquée au moteur EPS et la force maximale disponible est déterminée, et **en ce que** ladite différence est prise en compte pour l'estimation d'un potentiel du moteur EPS.

2. Procédé selon au moins l'une des revendications précédentes, **caractérisé en ce que** des forces de frottement non linéaires (F_Fric) sont déterminées et **en ce que** la valeur de limitation est déterminée en tenant compte des forces de frottement non linéaires (F_Fric).

3. Procédé selon au moins l'une des revendications précédentes, **caractérisé en ce que** des forces de chaussée (F_Str) sont déterminées et **en ce que** la valeur de limitation est déterminée en tenant compte des forces de chaussée (F_Str).

4. Procédé selon la revendication 3, **caractérisé en ce que** la détermination des forces de chaussée (F_Str) est effectuée sur la base d'une modélisation basée sur un ressort virtuel.

5. Procédé selon la revendication 4, **caractérisé en ce qu'**une raideur de ressort (c) du ressort virtuel est déterminée par l'intermédiaire de la vitesse du véhicule et d'un couple moteur.

6. Procédé selon la revendication 5, **caractérisé en ce que** la raideur de ressort (c) est déterminée à l'aide d'une méthode des moindres carrés, en particulier à l'aide d'une méthode des moindres carrés récursive (RLS).

7. Procédé selon au moins l'une des revendications précédentes, **caractérisé en ce qu'**il est prévu au moins un capteur destiné à la détection de l'environnement, en particulier une caméra (6) et/ou un capteur lidar (7) et/ou un capteur radar (8) et/ou un capteur à ultrasons.

8. Procédé selon la revendication 7, **caractérisé en ce que** l'environnement détecté est utilisé pour établir la plage de recherche (9) et/ou pour planifier la trajectoire.

9. Programme informatique comprenant un code de programme destiné à la mise en œuvre d'un procédé selon au moins l'une des revendications précédentes, lorsque le programme informatique est exécuté sur un ordinateur.

10. Support de stockage lisible par ordinateur comprenant des instructions qui amènent l'ordinateur sur lequel elles sont exécutées à mettre en œuvre un procédé selon l'une quelconque des revendications 1-8.

11. Dispositif de commande (2) pour diriger un véhicule (1) le long d'une trajectoire, **caractérisé en ce que**
la commande du véhicule (1) est effectuée à l'aide d'un procédé selon au moins l'une des revendications 1-8.

Fig. 1

Fig. 2

Fig. 3

M_Mot

11a

F_Mot_li

M_Mot_max

δ

12

13

δ_max_li

v_veh

10

c

15

11b

F_Mot_re

M_Mot_max

14

δ_max_re

M_Mot

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016221723 A1
- DE 102015209066 A1
- DE 102014223000 A1
- DE 102018203617 A1
- US 20170372150 A1